# EUROPEAN PATENT APPLICATION

(11) **EP 4 826 864 A1**
(43) Date of publication of application: **21.10.2026**
(21) Application number: 26172026.2
(22) Date of filing: 13.04.2026
(51) Int. Cl.: H01M 50/15, H01M 50/184, H01M 50/188, H01M 50/103, H01M 50/147, H01M 50/176, H01M 50/186, H01M 50/55

(54) **TOP COVER ASSEMBLY, BATTERY CELL, AND ELECTRICITY-CONSUMPTION DEVICE**

(30) Priority: 15.04.2025 CN 202520716703 U
(71) Applicant: Xiamen Hithium Energy Storage Technology Co., Ltd., Xiamen, Fujian 361100 (CN)
(72) Inventor: XIAO, Hepan, Xiamen, 361100 (CN); XU, Weidong, Xiamen, 361100 (CN); LI, Wenbo, Xiamen, 361100 (CN)
(74) Representative: Mewburn Ellis LLP

(57) **Abstract**

A top cover assembly, a battery cell, and an electricity-consumption device are provided. The top cover assembly includes a top cover, a terminal post, an upper plastic member, and a sealing ring. The top cover has a first surface and a second surface opposite to each other. A first hole and a first mounting recess are defined in the top cover. The terminal post passes through the first hole. The upper plastic member includes an upper-plastic-member body and a protrusion connected to the upper-plastic-member body and sleeved on the terminal post. The sealing ring is sleeved on the terminal post, where the sealing ring is partially located in the first hole and is in interference fit with the protrusion, and the sealing ring located in the first hole is further in contact with a bottom surface and a first transitional curved surface of an outer surface of the protrusion.

## Description

### CROSS-REFERENCE TO RELATED APPLICATIONS

This application claims priority under 35 U.S.C. § 119(a) to Chinese Patent Application No. 202520716703.8, filed April 15, 2025, the entire disclosure of which is incorporated herein by reference.

### TECHNICAL FIELD

This disclosure relates to the field of energy storage technology, and in particular, to a top cover assembly, a battery cell, and an electricity-consumption device.

### BACKGROUND

With development of green energy and enhancement of environmental awareness of people, battery cells with recyclable characteristics are increasingly widely used. A battery cell includes an electrode assembly, a housing, and a top cover assembly. The electrode assembly is located in an accommodating space cooperatively defined by the housing and the top cover assembly. The top cover assembly includes a top cover and a terminal post. The terminal post is mounted on the top cover.

### SUMMARY

A top cover assembly, a battery cell, and an electricity-consumption device are provided in embodiments of the disclosure.

In a first aspect, a top cover assembly is provided in the disclosure. The top cover assembly includes a top cover, a terminal post, an upper plastic member, and a sealing ring. The top cover has a first surface and a second surface. The first surface and the second surface are opposite to each other in a thickness direction of the top cover. A first hole and a first mounting recess are defined in the top cover. The first hole extends through the first surface and the second surface. An opening of the first mounting recess is located on the first surface. The first mounting recess is coaxial with and in communication with the first hole. The terminal post passes through the first hole. The upper plastic member includes an upper-plastic-member body and a protrusion connected to the upper-plastic-member body. Both the upper-plastic-member body and the protrusion are sleeved on the terminal post. The upper-plastic-member body is mounted in the first mounting recess. The protrusion is mounted in the first hole. An outer surface of the protrusion includes a guide inclined surface, a first transitional curved surface, and a bottom surface. The bottom surface is an end surface of an end of the protrusion facing away from the upper-plastic-member body. A distance between the guide inclined surface and a hole wall of the first hole gradually increases in a direction in which the upper-plastic-member body faces towards the protrusion. The first transitional curved surface is connected between the guide inclined surface and the bottom surface in a bent manner. The sealing ring is sleeved on the terminal post. The sealing ring is partially located in the first hole and is in interference fit with the end of the protrusion facing away from the upper-plastic-member body. The sealing ring located in the first hole is further in contact with the bottom surface and the first transitional curved surface.

In a second aspect, a battery cell is further provided in the disclosure. The battery cell includes an electrode assembly, a housing, and the top cover assembly described above. The top cover assembly is connected to the housing. The top cover assembly and the housing cooperatively define an accommodating space. The electrode assembly is located in the accommodating space.

In a third aspect, an electricity-consumption device is further provided in the disclosure. The electricity-consumption device includes the battery cell described above.

### BRIEF DESCRIPTION OF THE DRAWINGS

FIG. 1 is a schematic structural view of an energy storage system provided in embodiments of the disclosure.
FIG. 2 is a schematic structural view of a battery cell provided in embodiments of the disclosure.
FIG. 3 is a schematic structural view of a top cover assembly provided in embodiments of the disclosure.
FIG. 4 is an exploded schematic structural view of the top cover assembly as illustrated in FIG. 3.
FIG. 5A is a schematic structural view of a top cover of the top cover assembly as illustrated in FIG. 3, viewed from a direction.
FIG. 5B is an enlarged schematic view of region B as illustrated in FIG. 5A.
FIG. 6 is a schematic structural view of a top cover of the top cover assembly as illustrated in FIG. 3, viewed from another direction.
FIG. 7 is a partial schematic cross-sectional view of a structure as illustrated in FIG. 3, taken along cutting line A-A.
FIG. 8 is a schematic structural view of a lower plastic member of the top cover assembly as illustrated in FIG. 3, viewed from a direction.
FIG. 9 is a schematic structural view of a lower plastic member of the top cover assembly as illustrated in FIG. 3, viewed from another direction.
FIG. 10 is another partial schematic cross-sectional view of a structure as illustrated in FIG. 3, taken along cutting line A-A.
FIG. 11 is a schematic structural view of a terminal post of the top cover assembly as illustrated in FIG. 3, viewed from a direction.
FIG. 12 is a schematic structural view of an upper plastic member of the top cover assembly as illustrated in FIG. 3, viewed from a direction.
FIG. 13A is a schematic structural view of an upper plastic member of the top cover assembly as illustrated in FIG. 3, viewed from another direction.
FIG. 13B is an enlarged schematic view of region C as illustrated in FIG. 13A.
FIG. 14 is an enlarged schematic view of region E as illustrated in FIG. 10.
FIG. 15 is a schematic structural view of a pressing ring of the top cover assembly as illustrated in FIG. 3, viewed from a direction.
FIG. 16 is a schematic structural view of a sealing ring of the top cover assembly as illustrated in FIG. 3, viewed from a direction.

Illustration of reference signs of the accompanying drawings:
energy storage system 400, electrical energy conversion apparatus 410, first user load 420, second user load 430, electricity-consumption device 300, battery cell 200, top cover assembly 100, housing 210, electrode assembly 220, top cover 10, upper plastic member 20, lower plastic member 30, terminal post 40, sealing ring 50, pressing ring 60, limiting body 70, explosion-proof valve assembly 80, first surface 101, second surface 102, first hole 11, first mounting recess 12, fourth transitional curved surface 19, first limiting hole 13, first liquid-injection hole 14, explosion-proof hole 15, mounting portion 16, recess 17, positioning hole 18, explosion-proof valve 81, explosion-proof valve protection sheet 82, third surface 301, fourth surface 302, second hole 31, positioning post 32, thinning recess 33, post body 41, base 42, first sub-post 411, second sub-post 412, cross-sectional width *D2* of the first sub-post 411 in a height direction of the terminal post 40, cross-sectional width *D3* of the second sub-post 412 in the height direction of the terminal post 40, cross-sectional width *D1* of the base 42 in the height direction of the terminal post 40, second gap *W2*, upper-plastic-member body 21, protrusion 22, outer side surface 222, guide inclined surface 221, first transitional curved surface 223, second transitional curved surface 225, bottom surface 224, first through hole 23, second mounting recess 211, second through hole 61, second limiting hole 62, first gap *W1,* first sub-portion 51, second sub-portion 52.

### DETAILED DESCRIPTION

For ease of understanding, terms involved in embodiments of the disclosure will be first explained.

"And/or" is only an association relationship for describing associated objects and means that three relationships may exist. For example, A and/or B may mean the following three cases: only A exists, both A and B exist, and only B exists.

"Multiple" means two or more than two.

"Connection" may be understood in a broad sense. For example, a connection between A and B may be a direct connection between A and B, or an indirect connection between A and B through an intermediary.

Embodiments of the disclosure will be clearly described below with reference to the accompanying drawings.

A top cover assembly, a battery cell, and an electricity-consumption device are provided in embodiments of the disclosure.

Since energy required by people has strong temporal and spatial characteristics, in order to use energy in a reasonable manner and improve energy utilization, it may need to store energy in the same energy form or covert energy into another energy form for storage by means of a medium or a device, and then to release energy in a specific energy form based on requirements of future applications. As is well known, at present, generation of green electrical energy relies mainly on photovoltaics, wind power, water potential, and the like. However, in general, wind energy, solar energy, and the like may suffer from strong intermittence and large volatility, resulting in instability of a power grid, insufficient power supply during peak demand periods, and excessive power generation during off-peak periods. In addition, an unstable voltage may further damage electric power. Therefore, "curtailment of wind and photovoltaics" may occur due to insufficient power demand or limited power-grid accommodation ability. Energy storage is required to address these issues. That is, electrical energy is converted into other forms of energy for storage by physical or chemical means, and stored energy is then converted back into electrical energy and released when needed. In brief, energy storage is similar to a large-sized "power bank", which stores electrical energy when photovoltaics and wind energy are abundant and releases stored electric power when needed.

Taking electrochemical energy storage as an example, an electricity-consumption device is provided in embodiments of the disclosure. A group of chemical cells is disposed in the electricity-consumption device. Chemical elements in the chemical cells can be mainly used as an energy storage medium, and a charging and discharging process are accompanied by chemical reaction or change of the energy storage medium. In brief, electrical energy generated by wind energy and solar energy is stored in the chemical cells. When external electrical energy demand reaches a peak, the power stored is released for use, or is transferred for use in regions with electrical energy shortages.

At present, energy storage can be applied in a wide range of scenarios, including generation-side energy storage, grid-side energy storage, renewable energy grid-connected energy storage, user-side energy storage, and the like. Corresponding types of electricity-consumption devices include the following.

A large-sized energy storage container applied in a grid-side energy storage scenario: The energy storage container may serve as a high-quality active and reactive regulation power source in the grid, enabling load balancing of electrical energy across time and space, enhancing the capability for integration of renewable energy, and playing a significant role in the backup of a grid system, relieving peak load supply pressure, and performing peak shaving and frequency modulation.

Small and medium-sized energy storage cabinets applied in industrial and commercial energy storage scenarios at the user side and small-sized household energy storage boxes applied in household energy storage scenarios at the user side: The main operating mode is "peak shaving and valley filling". Electricity prices vary significantly between peak and off-peak periods according to electricity demand. Therefore, when a user possesses an electricity-consumption device, in order to reduce costs, the user usually charges the energy storage cabinet/box during the low electricity price period, and discharges the electricity in the electricity-consumption device for use during the peak electricity price period, thereby reducing electricity cost. In addition, in remote regions, as well as regions prone to natural disasters such as earthquakes and hurricanes, the presence of household electricity-consumption devices is equivalent to that a backup power source is provided for users and the power grid, which can avoid the inconvenience caused by frequent power outages due to disasters or other reasons.

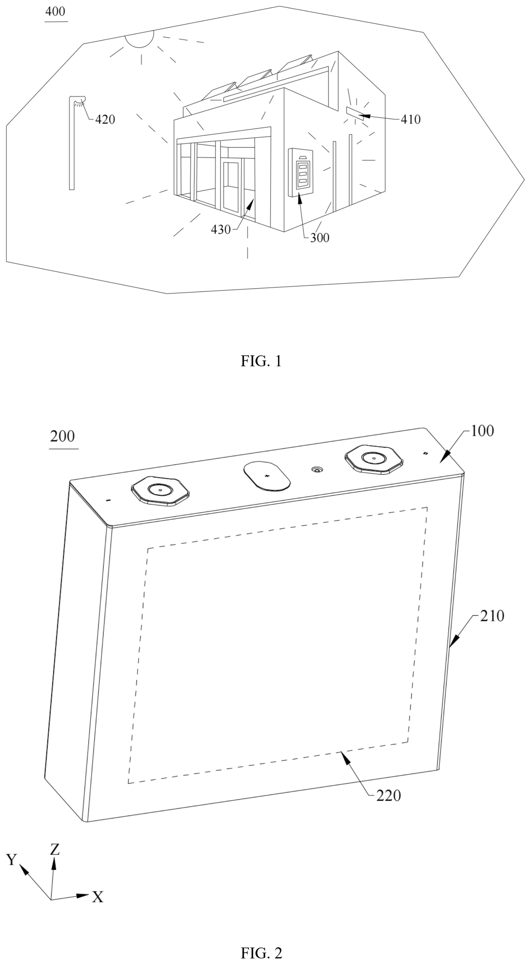

Reference can be made to FIG. 1, where FIG. 1 is a schematic structural view of an energy storage system 400 provided in embodiments of the disclosure. A household energy storage scenario in user-side energy storage is taken as an example for illustration of embodiments of the disclosure, and an electricity-consumption device 300 in the disclosure is not limited to the household energy storage scenario.

The energy storage system 400 is provided in embodiments of the disclosure. The energy storage system 400 includes an electrical energy conversion apparatus 410, a first user load 420, a second user load 430, and the electricity-consumption device 300. The electricity-consumption device 300 is a small-sized energy storage box that can be mounted on an outdoor wall by means of wall hanging. Specifically, a photovoltaic panel can convert solar energy into electrical energy during low electricity price periods. The electricity-consumption device 300 is configured to store the electrical energy and supply the electrical energy to street lamps and household appliance for use during peak electricity price periods, or to supply power when the power grid is off/out of power.

The electricity-consumption device 300 may include, but is not limited to, a battery cell, a battery module, a battery pack, a battery system, and the like. When the electricity-consumption device 300 includes multiple battery cells 200, the multiple battery cells 200 are electrically connected and are all located inside a housing of the electricity-consumption device 300. Under the protection of the housing, the multiple battery cells 200 can be protected from the interference of the external environment. Exemplarily, the multiple battery cells 200 are arranged at intervals. The multiple battery cells 200 may be connected in series, or in parallel, or in a mixed connection of series and parallel, so as to realize a larger capacity and power. The embodiments of the disclosure are illustrated by taking the electricity-consumption device 300 including the battery cell 200 as an example, but it may be understood that the electricity-consumption device 300 is not limited thereto.

Reference can be made to FIG. 2, where FIG. 2 is a schematic structural view of the battery cell 200 provided in embodiments of the disclosure.

In the following, for ease of illustration, a length direction of the battery cell 200 is defined as an X direction, a width direction of the battery cell 200 is defined as a Y direction, and a height direction of the battery cell 200 is defined as a Z direction. The X direction, the Y direction, and the Z direction are mutually perpendicular.

The battery cell 200 may include a top cover assembly 100, a housing 210, and an electrode assembly 220. The top cover assembly 100 is connected to the housing 210. The top cover assembly 100 and the housing 210 cooperatively define an accommodating space. The electrode assembly 220 is located in the accommodating space. Exemplarily, the top cover assembly 100 may be welded to the housing 210 by welding. The housing 210 may be made of a metal material, such as aluminum alloy. The battery cell 200 may be a cylindrical battery cell 200 or a prismatic battery cell 200, etc.

The electrode assembly 220 may include at least two electrode cores (not illustrated in the figure). The at least two electrode cores are arranged in sequence in a thickness direction of the battery cell 200. With the arrangement of the multiple electrode cores, the capacity of the battery cell 200 can be increased, so that the battery cell 200 can be used for a long time, thereby expanding applicable scenarios of the battery cell 200. Each electrode core may include a jelly roll, a first tab, and a second tab. Both the first tab and the second tab are connected to the jelly roll. The polarity of the first tab and the polarity of the second tab are opposite, where one of the first tab and the second tab is a positive tab, and the other of the first tab and the second tab is a negative tab.

It may be noted that, FIG. 2 aims to schematically illustrate a connection relationship between the top cover assembly 100, the housing 210, and the electrode assembly 220, and does not constitute a specific limitation on connection locations, specific configurations, and quantity of various components. The structure illustrated in embodiments of the disclosure does not constitute a specific limitation on the battery cell 200. In other embodiments of the disclosure, the battery cell 200 may include more or fewer components than those illustrated in FIG. 2, or certain components may be combined or divided, or the battery cell 200 may have different component arrangements. The components illustrated in FIG. 2 may be implemented in hardware, software, or a combination of software and hardware.

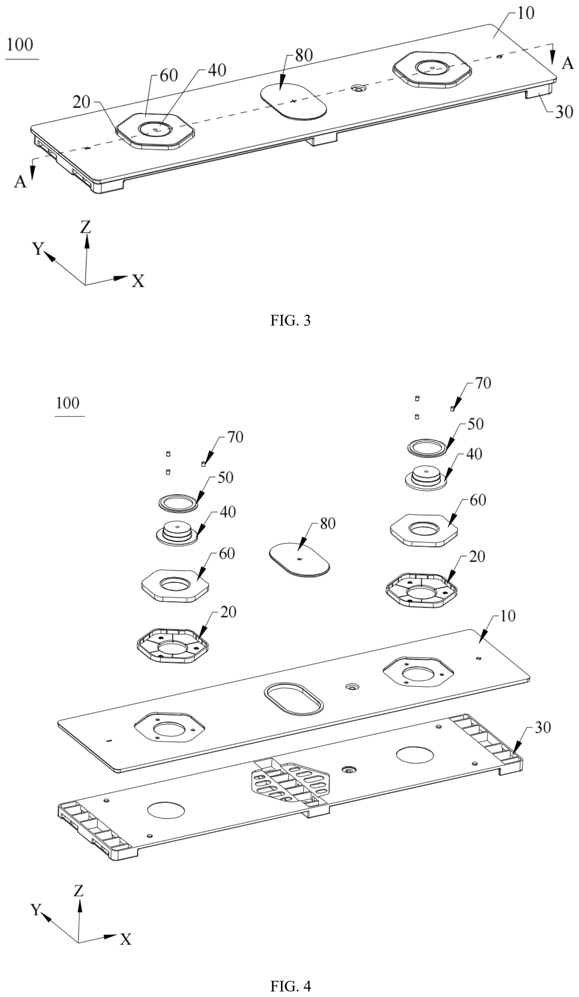

Reference can be made to FIG. 3 and FIG. 4, where FIG. 3 is a schematic structural view of the top cover assembly 100 provided in embodiments of the disclosure, and FIG. 4 is an exploded schematic structural view of the top cover assembly 100 as illustrated in FIG. 3.

The top cover assembly 100 may include a top cover 10, an upper plastic member 20, a lower plastic member 30, a terminal post 40, a sealing ring 50, a pressing ring 60, a limiting body 70, and an explosion-proof valve assembly 80. The upper plastic member 20 is mounted on one side of the top cover 10 in a thickness direction of the top cover 10 (the Z direction as illustrated in the figure), the lower plastic member 30 is mounted on the other side of the top cover 10 in the thickness direction of the top cover 10, and the lower plastic member 30 and the upper plastic member 20 respectively protrude from two surfaces of the top cover 10 that are opposite to each other in the thickness direction of the top cover 10. The terminal post 40 is mounted on the top cover 10, the upper plastic member 20, and the lower plastic member 30, and is insulated from the top cover 10 through the upper plastic member 20 and the lower plastic member 30. The terminal post 40 may also serve as an electrode lead of the battery cell 200, thereby establishing electrical connection between the battery cell 200 and an external device. The sealing ring 50 is sleeved on the terminal post 40, and is located between the lower plastic member 30 and the terminal post 40 and located between the top cover 10 and the terminal post 40. The sealing ring 50 can be configured to seal a gap between the top cover 10 and the terminal post 40, so as to prevent electrolyte from intruding into the gap, thereby avoiding a reduction in insulation performance between the top cover 10 and the electrode post 40 and safety of the electrode assembly 220. The pressing ring 60 is mounted on the upper plastic member 20, is sleeved on the terminal post 40, and is electrically connected to the terminal post 40. The limiting body 70 passes through the upper plastic member 20 and is located between the pressing ring 60 and the top cover 10. The explosion-proof valve assembly 80 is mounted on the top cover 10 and is configured for pressure relief protection for the battery cell 200.

The upper plastic member 20 may be implemented as two upper plastic members, and the two upper plastic members 20 are spaced apart from each other on two sides of the top cover 10 in a length direction of the top cover 10 (the X direction as illustrated in the figure). The pressing ring 60 may be implemented as two pressing rings, and the two pressing rings 60 are respectively mounted on the two upper plastic members 20. The terminal post 40 may be implemented as two terminal posts, and the two terminal posts 40 may be a negative terminal post and a positive terminal post respectively. The two terminal posts 40 may be spaced apart from each other in the length direction of the top cover 10. Each of the terminal posts 40 is mounted on the lower plastic member 30, the top cover 10, one upper plastic member 20, and one pressing ring 60. The sealing ring 50 may be implemented as two sealing rings. One of the two sealing rings 50 is sleeved on the positive terminal post, and the other of the two sealing rings 50 is sleeved on the negative terminal post. The limiting body 70 may be implemented as multiple limiting bodies. The multiple limiting bodies 70 pass through the two upper plastic members 20 at intervals, and are located between the top cover 10 and the two pressing rings 60.

The components of the top cover assembly 100 will be described in detail below by taking a structure of the top cover 10, the lower plastic member 30, one upper plastic member 20, one pressing ring 60, one terminal post 40, one sealing ring 50, and one limiting body 70 as an example. In case of no conflict, the following illustration of the structure of one upper plastic member 20, one pressing ring 60, one terminal post 40, one sealing ring 50, and one limiting body 70 may also be applied to another upper plastic member 20, pressing ring 60, terminal post 40, sealing ring 50, and limiting body 70.

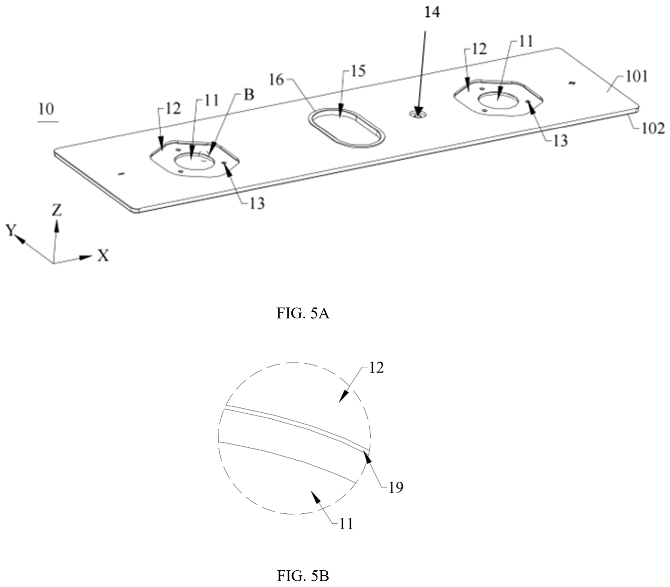

Reference can be made to FIG. 5A and FIG. 5B, where FIG. 5A is a schematic structural view of the top cover 10 of the top cover assembly 100 as illustrated in FIG. 3, viewed from a direction, and FIG. 5B is an enlarged schematic view of region B as illustrated in FIG. 5A.

The top cover 10 may have a first surface 101 and a second surface 102. The second surface 102 and the first surface 101 are opposite to each other in the thickness direction of the top cover 10. The first surface 101 may face away from the electrode assembly 220, and the second surface 102 may face towards the electrode assembly 220.

A first hole 11 and a first mounting recess 12 may be defined in the top cover 10. The first hole 11 may extend through the top cover 10 in the thickness direction of the top cover 10. That is, the first hole 11 may extend through the first surface 101 and the second surface 102. An opening of the first mounting recess 12 may be located on the first surface 101. The first mounting recess 12 may be recessed from the first surface 101 towards the inside of the top cover 10. The first mounting recess 12 may be coaxial with and in communication with the first hole 11. A cross-sectional width of the first mounting recess 12 in the thickness direction of the top cover 10 may be greater than a cross-sectional width of the first hole 11 in the thickness direction of the top cover 10.

Exemplarily, the first hole 11 may be implemented as two first holes. The two first holes 11 may be spaced apart from each other in the length direction of the top cover 10. The first mounting recess 12 may be implemented as two first mounting recesses. The two first mounting recesses 12 may be spaced apart from each other in the length direction of the top cover 10. Each of the first mounting recesses 12 is coaxial with and in communication with one of the first holes 11. The first hole 11 may be a cylindrical hole. The first mounting recess 12 may be a hexagonal blind recess.

A fourth transitional curved surface 19 is connected between a bottom wall of the first mounting recess 12 and an inner wall of the first hole 11. The bottom wall of the first mounting recess 12 is arranged opposite to the opening of the first mounting recess 12 in the thickness direction of the top cover 10. The fourth transitional curved surface 19 may be an annular curved surface, and is disposed around an outer edge of the first hole 11. The fourth transitional curved surface 19 may be bent towards a central axis of the first hole 11.

A first limiting hole 13 may be defined in the top cover 10. An opening of the first limiting hole 13 may be located on the bottom wall of the first mounting recess 12. The first limiting hole 13 may be recessed from the bottom wall of the first mounting recess 12 towards the inside of the top cover 10. The first limiting hole 13 may be located at the outer edge of the first hole 11. The first limiting hole 13 is a blind hole. The first limiting hole 13 may be implemented as multiple first limiting holes. The structures of the multiple first limiting holes 13 may be similar, identical, or different. The multiple first limiting holes 13 may be spaced apart from each other on the bottom wall of the first mounting recess 12. Further, the multiple first limiting holes 13 may be spaced apart from each other in a circumferential direction of the first hole 11.

Exemplarily, the first limiting hole 13 may be implemented as six first limiting holes. Among the six first limiting holes 13, three first limiting holes 13 may be spaced apart from each other on a bottom wall of one of the first mounting recesses 12, and the other three first limiting holes 13 may be spaced apart from each other on a bottom wall of the other of the first mounting recesses 12.

An explosion-proof hole 15 may be defined in the top cover 10. The explosion-proof hole 15 extends through the top cover 10 in the thickness direction of the top cover 10. Exemplarily, a first liquid-injection hole 14 and the explosion-proof hole 15 may be located between the two first mounting recesses 12.

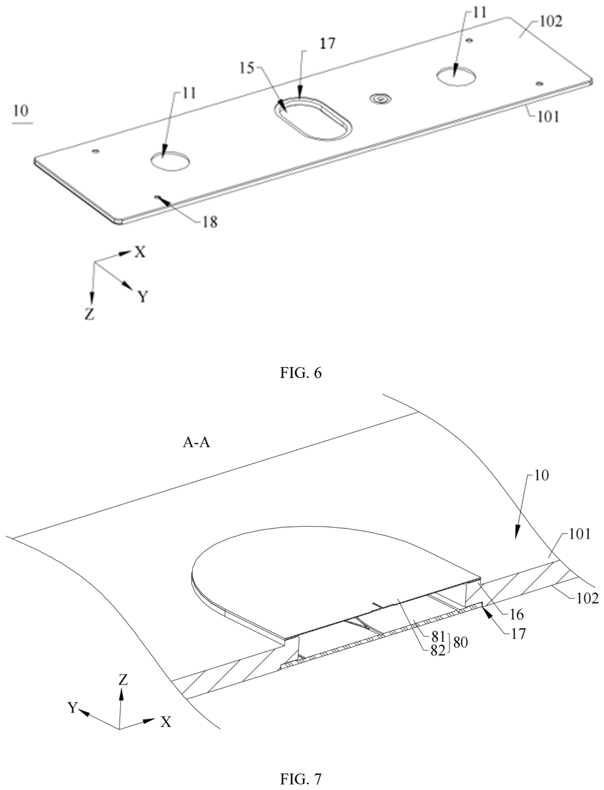

Reference can be made to FIG. 5A, FIG. 6, and FIG. 7, where FIG. 6 is a schematic structural view of the top cover 10 of the top cover assembly 100 as illustrated in FIG. 3, viewed from another direction, and FIG. 7 is a partial schematic cross-sectional view of a structure as illustrated in FIG. 3, taken along cutting line A-A.

The top cover 10 may be provided with a mounting portion16 and a recess 17. The mounting portion 16 may be disposed on the first surface 101 and protrude from the first surface 101 in a direction away from the top cover 10. The mounting portion 16 may also be disposed around an outer edge of the explosion-proof hole 15. An opening of the recess 17 may be located on the second surface 102. The recess 17 may be recessed from the second surface 102 towards the inside of the top cover 10. The recess 17 may be coaxial with and in communication with the explosion-proof hole 15.

A positioning hole 18 may be defined in the top cover 10. An opening of the positioning hole 18 may be located on the second surface 102. The positioning hole 18 may be recessed from the second surface 102 towards the inside of the top cover 10. The positioning hole 18 may be a blind hole. The positioning hole 18 may be implemented as multiple positioning holes. The structures of the multiple positioning holes 18 may be similar, identical, or different. The multiple positioning holes 18 may be spaced apart from each other on the top cover 10. Exemplarily, the positioning hole 18 may be implemented as four positioning holes. The four positioning holes 18 are respectively defined at four corners of the top cover 10.

Reference can be made to FIG. 7, where FIG. 7 is a partial schematic cross-sectional view of a structure as illustrated in FIG. 3, taken along cutting line A-A.

The explosion-proof valve assembly 80 may include an explosion-proof valve 81 and an explosion-proof valve protection sheet 82. Both the explosion-proof valve 81 and the explosion-proof valve protection sheet 82 may be mounted on the top cover 10, and are arranged in sequence in the thickness direction of the top cover 10. Specifically, the explosion-proof valve 81 may be located in the recess 17 of the top cover 10 and cover an opening of the explosion-proof hole 15 located on the second surface 102 of the top cover 10. The explosion-proof valve protection sheet 82 may be connected to the mounting portion 16 of the top cover 10 and cover an opening of the explosion-proof hole 15 located on the first surface 101 of the top cover 10. The explosion-proof valve protection sheet 82 may also cover the explosion-proof valve 81.

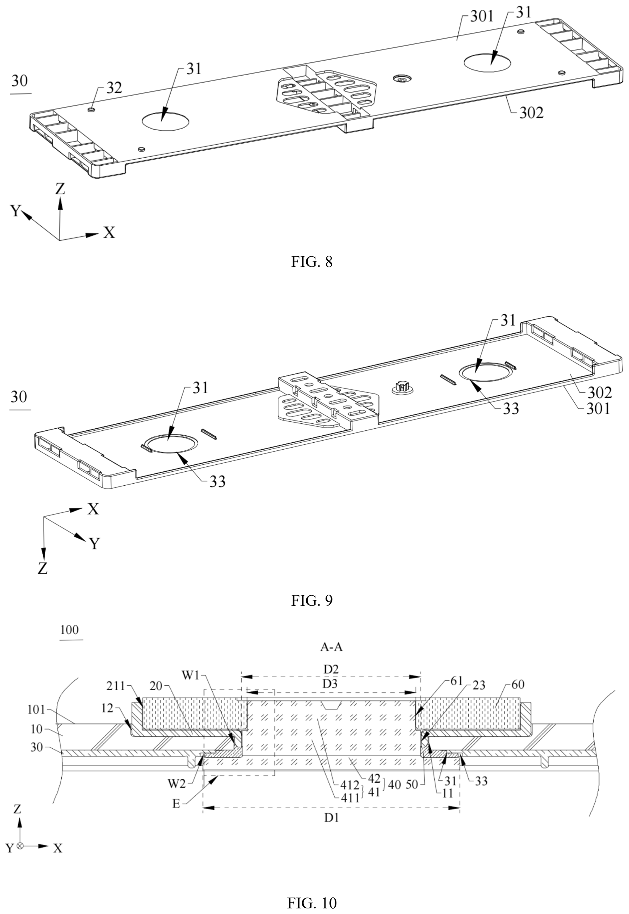

Reference can be made to FIG. 3 and FIG. 8, where FIG. 8 is a schematic structural view of the lower plastic member 30 of the top cover assembly 100 as illustrated in FIG. 3, viewed from a direction.

The lower plastic member 30 may be stacked with the top cover 10, and have a third surface 301 and a fourth surface 302. The fourth surface 302 may be opposite to the third surface 301 in a thickness direction of the lower plastic member 30. The third surface 301 may face towards the top cover 10, and the fourth surface 302 may face towards the electrode assembly 220.

A second hole 31 may be defined in the lower plastic member 30. The second hole 31 may extend through the lower plastic member 30 in the thickness direction of the lower plastic member 30 (the Z direction as illustrated in the figure), and is in communication with the first hole 11 of the top cover 10. That is, the second hole 31 may extend through the third surface 301 and the fourth surface 302. Exemplarily, the second hole 31 may be implemented as two second holes. The two second holes 31 may be spaced apart from each other in a length direction of the lower plastic member 30 (the X direction as illustrated in the figure). Each second hole 31 is in communication with a corresponding first hole 11 of the top cover 10.

The lower plastic member 30 may be provided with a positioning post 32. The positioning post 32 may be disposed on the third surface 301 and protrude from the third surface 301 in a direction towards the top cover 10. The positioning post 32 may be mounted in the positioning hole 18 of the top cover 10 to establish a fixed connection between the lower plastic member 30 and the top cover 10. A shape of the positioning post 32 may be adapted to a shape of the positioning hole 18 of the top cover 10. The positioning post 32 may be implemented as multiple positioning posts. The structures of the multiple positioning posts 32 may be similar, identical, or different. The multiple positioning posts 32 may be spaced apart from each other on the lower plastic member 30. Exemplarily, the positioning post 32 may be implemented as four positioning posts. The four positioning posts 32 are respectively disposed at four corners of the lower plastic member 30. Each positioning post 32 is mounted in a corresponding positioning hole 18 of the top cover 10.

Reference can be made to FIG. 8 and FIG. 9, where FIG. 9 is a schematic structural view of the lower plastic member 30 of the top cover assembly 100 as illustrated in FIG. 3, viewed from another direction.

A thinning recess 33 may be defined in the lower plastic member 30. An opening of the thinning recess 33 may be located on the fourth surface 302. The thinning recess 33 may be recessed from the fourth surface 302 towards the inside of the lower plastic member 30. The thinning recess 33 may be coaxial with and in communication with the second hole 31. Exemplarily, the thinning recess 33 may be implemented as two thinning recesses. The two thinning recesses 33 may be spaced apart from each other in the length direction of the lower plastic member 30. Each thinning recess 33 is coaxial with and in communication with a corresponding second hole 31.

It may be understood that, by configuring the thinning recess 33, the thickness of the lower plastic member 30 can be reduced while ensuring the strength of the lower plastic member 30, thereby reducing the weight of the lower plastic member 30, which is beneficial for achieving miniaturization and reduced thickness of the top cover assembly 100.

A distance between a bottom wall of the thinning recess 33 and the third surface 301 of the lower plastic member 30 may range from 0.1 mm to 0.7 mm (including endpoint values of 0.1 mm and 0.7 mm). The bottom wall of the thinning recess 33 may be arranged opposite to the opening of the thinning recess 33 in the thickness direction of the lower plastic member 30. Exemplarily, the distance between the bottom wall of the thinning recess 33 and the third surface 301 of the lower plastic member 30 may be 0.3 mm.

It may be understood that, if the distance between the bottom wall of the thinning recess 33 and the third surface 301 of the lower plastic member 30 is set to be less than 0.1 mm, the lower plastic member 30 may not have the Z-direction load-bearing capability at a location where the thinning recess 33 is defined, which may easily lead to the failure of the top cover assembly 100 and an increase in the manufacturing difficulty of the lower plastic member 30. If the distance between the bottom wall of the thinning recess 33 and the third surface 301 of the lower plastic member 30 is set to be greater than 0.7 mm, a step wall of the lower plastic member 30 may be too thin, resulting in a significant decrease in the sealing performance between the lower plastic member 30 and the sealing ring 50 during assembly of the lower plastic member 30 with the sealing ring 50. Therefore, by setting the distance between the bottom wall of the thinning recess 33 and the third surface 301 of the lower plastic member 30 to range from 0.1 mm to 0.7 mm, the above problems can be fully avoided, thereby improving the operating reliability of the top cover assembly 100.

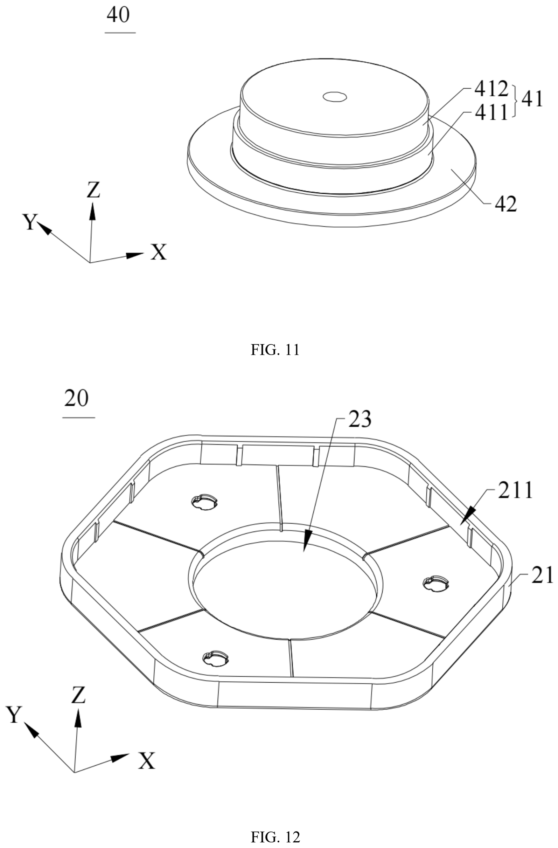

Reference can be made to FIG. 10 and FIG. 11, where FIG. 10 is another partial schematic cross-sectional view of a structure as illustrated in FIG. 3, taken along cutting line A-A, and FIG. 11 is a schematic structural view of the terminal post 40 of the top cover assembly 100 as illustrated in FIG. 3, viewed from a direction.

The terminal post 40 may include a post body 41 and a base 42. The post body 41 may be coaxial with and connected to the base 42. The post body 41 may pass through the first hole 11 of the top cover 10 and the second hole 31 of the lower plastic member 30. Part of the post body 41 may protrude relative to the first surface 101 of the top cover 10 in a direction away from the top cover 10. Specifically, the post body 41 may include a first sub-post 411 and a second sub-post 412. The first sub-post 411 may be coaxial with and connected to the second sub-post 412. The first sub-post 411 may be connected between the second sub-post 412 and the base 42. That is, in a height direction of the terminal post 40, the base 42, the first sub-post 411, and the second sub-post 412 may be connected in sequence. A cross-sectional width *D2* of the first sub-post 411 in a height direction of the terminal post 40 (the Z direction as illustrated in the figure) may be greater than a cross-sectional width *D3* of the second sub-post 412 in the height direction of the terminal post 40 and less than a cross-sectional width *D1* of the base 42 in the height direction of the terminal post 40. That is, a projection of the post body 41 in the height direction of the terminal post 40 may completely fall on the base 42. The first sub-post 411 may be located in the first hole 11 of the top cover 10 and the second hole 31 of the lower plastic member 30. Part of the second sub-post 412 may be located in the first hole 11 of the top cover 10, and the remaining part of the second sub-post 412 may protrude relative to the first surface 101 of the top cover 10.

The base 42 may be located on a side of the lower plastic member 30 facing away from the top cover 10 (i.e., a side of the fourth surface 302 of the lower plastic member 30), and a second gap *W2* is defined between the base 42 and the lower plastic member 30. The second gap *W2* may surround the post body 41. That is, in a thickness direction of the top cover assembly 100 (the Z direction as illustrated in the figure), the second gap *W2* may be located between the top cover 10 and the lower plastic member 30 and surround the outside of the post body 41. A projection of the base 42 on the lower plastic member 30 in the thickness direction of the top cover assembly 100 (the Z direction as illustrated in the figure) may partially fall on the lower plastic member 30. That is, in the thickness direction of the top cover assembly 100, there may be a certain overlapping portion between the base 42 and the lower plastic member 30.

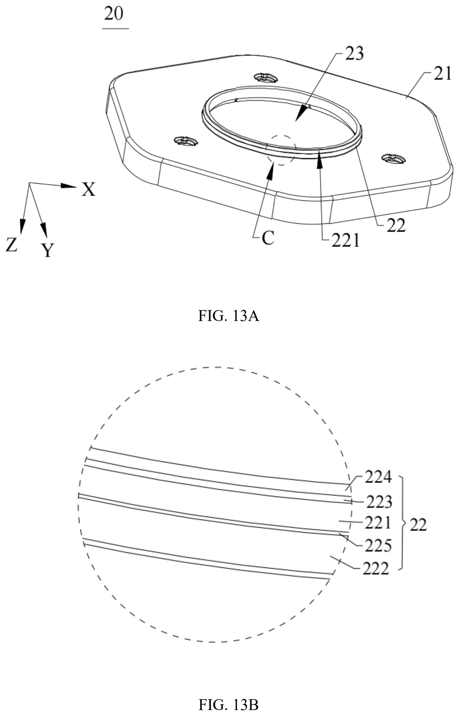

Reference can be made to FIG. 10, FIG. 12, and FIG. 13A, where FIG. 12 is a schematic structural view of the upper plastic member 20 of the top cover assembly 100 as illustrated in FIG. 3, viewed from a direction, and FIG. 13A is a schematic structural view of the upper plastic member 20 of the top cover assembly 100 as illustrated in FIG. 3, viewed from another direction.

The upper plastic member 20 may be sleeved on the terminal post 40 and located between the top cover 10 and the terminal post 40. Specifically, the upper plastic member 20 may include an upper-plastic-member body 21 and a protrusion 22. The upper-plastic-member body 21 may be coaxial with and connected to the protrusion 22. A cross-sectional width of the upper-plastic-member body 21 in a thickness direction of the upper plastic member 20 (the X direction as illustrated in the figure) may be greater than a cross-sectional width of the protrusion 22 in the thickness direction of the top cover 10.

A first through hole 23 may be defined in the upper plastic member 20. The first through hole 23 may extend through the upper plastic member 20 in a thickness direction of the upper plastic member 20 (the Z direction as illustrated in the figure). That is, the first through hole 23 may extend through both the upper-plastic-member body 21 and the protrusion 22 in the thickness direction of the upper plastic member 20. Part of the first sub-post 411 and at least part of the second sub-post 412 of the terminal post 40 may be located in the first through hole 23.

The upper-plastic-member body 21 may be mounted in the first mounting recess 12 of the top cover 10. Part of the upper-plastic-member body 21 is located in the first mounting recess 12 of the top cover 10, and the remaining part of the upper-plastic-member body 21 protrudes relative to the first surface 101 of the top cover 10 in a direction away from the lower plastic member 30. That is, the upper-plastic-member body 21 may be located on a side of the top cover 10 facing away from the lower plastic member 30 and also sleeved on the post body 41 of the terminal post 40.

A second mounting recess 211 may be defined in the upper-plastic-member body 21. An opening of the second mounting recess 211 may be located on a surface of the upper-plastic-member body 21 facing away from the protrusion 22. The second mounting recess 211 may be recessed from the surface of the upper-plastic-member body 21 facing away from the protrusion 22 towards the inside of the upper plastic member 20. The second mounting recess 211 may be coaxial with the first through hole 23. A cross-sectional width of the second mounting recess 211 in the thickness direction of the upper plastic member 20 may be greater than a cross-sectional width of the first through hole 23 in the thickness direction of the top cover 10.

Exemplarily, the first through hole 23 may be implemented as two first through holes. The two first through holes 23 may be respectively defined in the two upper plastic members 20. The second mounting recess 211 may be implemented as two second mounting recesses. The two second mounting recesses 211 may be respectively defined in the two upper plastic members 20. Each of the second mounting recesses 211 is coaxial with and in communication with a corresponding first through hole 23.

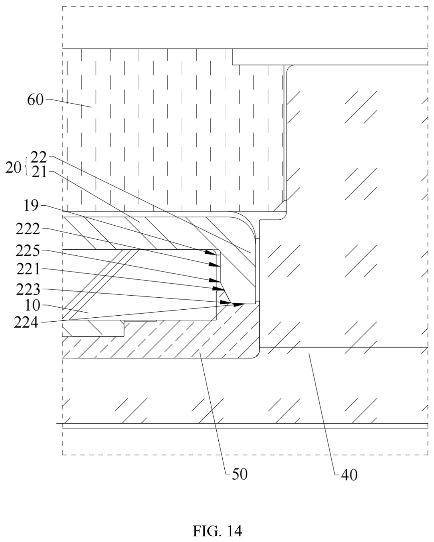

Reference can be made to FIG. 13A, FIG. 13B, and FIG. 14, where FIG. 13B is an enlarged schematic view of region C as illustrated in FIG. 13A, and FIG. 14 is an enlarged schematic view of region E as illustrated in FIG. 10.

One end of the protrusion 22 is fixedly connected to the upper-plastic-member body 21, and the other end of the protrusion 22 extends in a direction away from the upper-plastic-member body 21. The protrusion 22 may be located in the first hole 11 of the top cover 10 and also surround the outside of the post body 41 of the terminal post 40. A joint between the protrusion 22 and the upper-plastic-member body 21 is arranged facing towards the fourth transitional curved surface 19 of the top cover 10.

An outer surface of the protrusion 22 may include an outer side surface 222, a guide inclined surface 221, a first transitional curved surface 223, a second transitional curved surface 225, and a bottom surface 224. The outer side surface 222, the guide inclined surface 221, the first transitional curved surface 223, the second transitional curved surface 225, and the bottom surface 224 each may be a toroidal surface.

The outer side surface 222 is arranged facing towards an inner wall of the first hole 11 of the top cover 10. The bottom surface 224 is an end surface of an end of the protrusion 22 facing away from the upper-plastic-member body 21. The first transitional curved surface 223 is connected between the guide inclined surface 221 and the bottom surface 224 in a bent manner, and the second transitional curved surface 225 is connected between the outer side surface 222 and the guide inclined surface 221 in a bent manner. That is, the second transitional curved surface 225, the guide inclined surface 221, and the first transitional curved surface 223 are sequentially connected between the outer side surface 222 and the bottom surface 224. In other words, the first transitional curved surface 223 and the second transitional curved surface 225 are respectively disposed at two opposite ends of the guide inclined surface 221 in a thickness direction of the upper plastic member 20 (the Z direction as illustrated in the figure). Both the first transitional curved surface 223 and the second transitional curved surface 225 may be bent in a direction away from a central axis of the upper plastic member 20, and the guide inclined surface 221 may be inclined in a direction from the top cover 10 to the terminal post 40. In a direction in which the upper-plastic-member body 21 faces towards the protrusion 22, a distance between the guide inclined surface 221 and a hole wall of the first hole 11 gradually increases. A first gap *W1* may be defined between the guide inclined surface 221 and the inner wall of the first hole 11. Exemplarily, in a circumferential direction of the protrusion 22, the guide inclined surface 221 may be disposed, in a circumferential direction of the protrusion 22, at an end of the protrusion 22 facing away from the upper-plastic-member body 21.

It may be understood that, by forming the guide inclined surface 221 at the end of the protrusion 22 facing away from the upper-plastic-member body 21, during assembly of the upper plastic member 20 with the top cover 10, the guide inclined surface 221 can guide the protrusion 22 to quickly slide into the first hole 11 of the top cover 10, thereby realizing quick assembly between the upper plastic member 20 and the top cover 10, reducing the assembly time of the top cover assembly 100, and improving the assembly efficiency of the top cover assembly 100.

In addition, since the edges and corners of the top cover 10 can be softened by the fourth transitional curved surface 19 connected the bottom wall of the first mounting recess 12 and the inner wall of the first hole 11, the top cover 10 does not scratch the upper plastic member 20 during assembly of the upper plastic member 20 with the top cover 10, which can improve the assembly performance of the upper plastic member 20. Furthermore, since the first transitional curved surface 223 and the second transitional curved surface 225 are respectively disposed at two opposite ends of the guide inclined surface 221 in the thickness direction of the upper plastic member 20, the two opposite ends of the guide inclined surface 221 in the thickness direction of the upper plastic member 20 can be softened by the first transitional curved surface 223 and the second transitional curved surface 225 respectively, thereby effectively avoiding stress concentration and improving the strength of the upper plastic member 20, and avoiding collision between the upper plastic member 20 and the sealing ring 50 during assembly of the top cover assembly 100, thereby preventing the sealing ring 50 from being scratched. As such, the assembly performance of the top cover assembly 100 can be further improved, and the insulation performance between the top cover 10 and the terminal post 40 and the safety performance of the electrode assembly 220 can be ensured.

In a possible implementation, the outer surface of the protrusion 22 further includes a third transitional curved surface. The third transitional curved surface is connected between the bottom surface 224 and the inner wall of the first through hole 23 in a bent manner. The third transitional curved surface is further in contact with the sealing ring 50 located in the first hole 11.

It may be understood that, by disposing the third transitional curved surface between the bottom surface 224 and the inner wall of the first through hole 23 and configuring the third transitional curved surface to be in contact with the sealing ring 50 located in the first hole 11, the edges and corners of the sealing ring 50 can be further softened, thereby effectively avoiding stress concentration and improving the strength of the upper plastic member 20, and avoiding collision between the upper plastic member 20 and the sealing ring 50 during assembly of the top cover assembly 100, thereby preventing the sealing ring 50 from being scratched. As such, the assembly performance of the top cover assembly 100 can be further improved, and the insulation performance between the top cover 10 and the terminal post 40 and the safety performance of the electrode assembly 220 can be ensured.

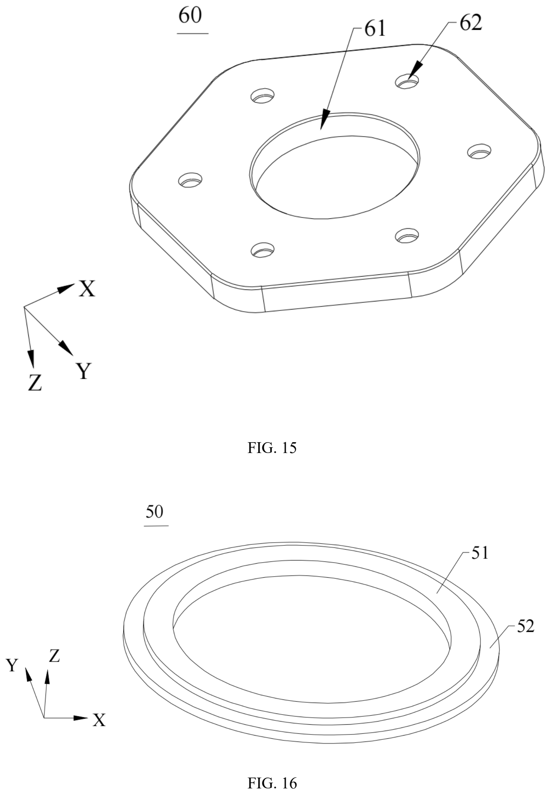

Reference can be made to FIG. 10 and FIG. 15, where FIG. 15 is a schematic structural view of the pressing ring 60 of the top cover assembly 100 as illustrated in FIG. 3, viewed from a direction.

The pressing ring 60 may be mounted in the second mounting recess 211 of the upper-plastic-member body 21, sleeved on the post body 41 of the terminal post 40, and electrically connected to the terminal post 40. Part of the pressing ring 60 may be located in the second mounting recess 211 of the upper-plastic-member body 21, and the remaining part of the pressing ring 60 may protrude, in a direction away from the protrusion 22, relative to the surface of the upper-plastic-member body 21 facing away from the protrusion 22.

A second through hole 61 may be defined in the pressing ring 60. The second through hole 61 may extend through the pressing ring 60 in a thickness direction of the pressing ring 60 (the Z direction as illustrated in the figure). The pressing ring 60 may surround the second sub-post 412 of the terminal post 40. That is, the second sub-post 412 of the terminal post 40 may be located in the second through hole 61.

A second limiting hole 62 may be defined in the pressing ring 60. An opening of the second limiting hole 62 may be located on a surface of the pressing ring 60 facing towards the upper plastic member 20. The second limiting hole 62 may be recessed from the surface of the pressing ring 60 facing towards the upper plastic member 20 towards the inside of the pressing ring 60. The second limiting hole 62 may be located at an outer edge of the second through hole 61. The second limiting hole 62 is a blind hole. The second limiting hole 62 may be implemented as multiple second limiting holes. The structures of the multiple second limiting holes 62 may be similar, identical, or different. The multiple second limiting holes 62 may be spaced apart from each other on the surface of the pressing ring 60 facing towards the upper plastic member 20. Further, the multiple second limiting holes 62 may be spaced apart from each other in a circumferential direction of the second through hole 61.

Exemplarily, the second limiting hole 62 may be implemented as twelve second limiting holes. Among the twelve second limiting holes 62, six second limiting holes 62 may be spaced apart from each other on a surface of one pressing ring 60 facing towards one upper plastic member 20, and arranged in sequence in a circumferential direction of one second through hole 61. The other six second limiting holes 62 may be spaced apart from each other on a surface of the other pressing ring 60 facing towards the other upper plastic member 20, and arranged in sequence in a circumferential direction of the other second through hole 61.

The limiting body 70 may pass through the upper plastic member 20. One end of the limiting body 70 is located in the first limiting hole 13 of the top cover 10, and the other end of the limiting body 70 is located in the second limiting hole 62 of the pressing ring 60. The limiting body 70 can be configured to support the pressing ring 60 and limit the rotation of the pressing ring 60 relative to the upper plastic member 20 in a circumferential direction of the upper plastic member 20. Exemplarily, the limiting body 70 may be implemented as twelve limiting bodies 70. Among the twelve limiting bodies 70, six limiting bodies 70 may pass through one upper plastic member 20 and be spaced apart from each other between the top cover 10 and one pressing ring 60, and the other six limiting bodies 70 may pass through the other upper plastic member 20 and be spaced apart from each other between the top cover 10 and the other pressing ring 60.

In embodiments of the disclosure, the sealing ring 50 may have good elastic deformation performance. The sealing ring 50 may elastically deform when subject to pressure and rebound after the pressure is removed. The sealing ring 50 may have a first state and a second state. When the sealing ring 50 is in the first state, the sealing ring 50 is separated from both the lower plastic member 30 and the top cover 10. When the sealing ring 50 is in the second state, the sealing ring 50 is sleeved on the post body 41 of the terminal post 40, and is located in the first hole 11 of the top cover 10, the second hole 31 of the lower plastic member 30, and the second gap *W2* between the lower plastic member 30 and the base 42 of the terminal post 40. That is, when the sealing ring 50 is in the first state, the sealing ring 50 is in a natural, uncompressed state. When the sealing ring 50 is in the second state, the sealing ring 50 is in a compressed state under pressure. The sealing ring 50 in the second state will be taken as an example for illustration below, but it may be understood that the disclosure is not limited thereto.

Reference can be made to FIG. 10. The sealing ring 50 may be sleeved on the post body 41 of the terminal post 40 and located in the first hole 11 of the top cover 10, the second hole 31 of the lower plastic member 30, and the second gap *W2* between the lower plastic member 30 and the base 42 of the terminal post 40. The sealing ring 50 located in the second gap *W2* is in interference fit with the lower plastic member 30 in a thickness direction of the top cover assembly 100 (the Z direction as illustrated in the figure). Exemplarily, an amount of interference between the sealing ring 50 located in the second gap *W2* and the lower plastic member 30 in the thickness direction of the top cover assembly 100 may be 0.1 mm.

It may be understood that, in the related art, when a top cover assembly is assembled, the insulation resistance between a terminal post and a top cover may be greater than 200 MΩ, which enables good insulation performance between the terminal post and the top cover. However, when the top cover assembly comes into contact with electrolyte, the electrolyte may invade a region where the terminal post of the top cover assembly is located. Due to errors such as manufacturing tolerances of various components of the top cover assembly and assembly tolerances during assembly, a gap may be defined between a sealing ring and an inner wall of a terminal post hole of a lower plastic member in a radial direction of the sealing ring. When electrolyte exists in the gap, the insulation performance between the top cover and the terminal post may be sharply reduced, and thus the safety of the electrode assembly is reduced. In addition, when there is an unsealed gap between an upper plastic member and the sealing ring, foreign objects such as intermediate metal debris or moisture are likely to intrude the gap, further reducing the insulation performance between the terminal post and the top cover.

Accordingly, in embodiments of the disclosure, part of the sealing ring 50 is located in the second gap *W2* between the lower plastic member 30 and the base 42 of the terminal post 40 in the thickness direction of the top cover assembly 100, and the sealing ring 50 located in the second gap *W2* is in interference fit with the lower plastic member 30 in the thickness direction of the top cover assembly 100. Therefore, the sealing ring 50 can effectively seal the second gap *W2* between the lower plastic member 30 and the top cover 10, so that the flow path of the electrolyte entering from the second gap *W2* into a space between the terminal post 40 and the top cover 10 can be blocked, thereby preventing the electrolyte from contacting the terminal post 40 and the top cover 10, thereby avoiding conduction and thus preventing a short circuit, which is beneficial for improving the safety performance of the electrode assembly 220.

Further, the second gap *W2* is formed at a position where the thinning recess 33 of the lower plastic member 30 is located, and the sealing ring 50 located in the thinning recess 33 is in interference fit with the lower plastic member 30.

It may be understood that, if the lower plastic member 30 does not have the thinning recess 33, after the lower plastic member 30 is assembled with the sealing ring 50, the sealing ring 50 located in the second gap *W2* may be relatively thin, which may reduce the sealing effect between the lower plastic member 30 and the terminal post 40. Further, if the second gap *W2* is absent, it may be difficult to form sealing in the height direction of the battery cell 200 (i.e., Z direction). Therefore, the difficulty in processing and manufacturing of the sealing ring 50 may be increased. In addition, since the thickness of the lower plastic member 30 at a location of the thinning recess 33 is relatively thin, disposing part of the sealing ring 50 in the thinning recess 33 can provide a certain deformation space for the sealing ring 50, thereby ensuring that the rebound force of the sealing ring 50 is not excessive, so as to avoid the reduction in the sealing effect between the lower plastic member 30 and the terminal post 40. Furthermore, after being compressed, the sealing ring 50 can extend in the radial direction of the sealing ring 50 to make full contact with the lower plastic member 30, thereby extending the sealing surface between the lower plastic member 30 and the sealing ring 50, and improving the sealing performance between the lower plastic member 30 and the terminal post 40.

In addition, in a length direction of the top cover assembly 100 (the X direction as illustrated in the figure), a length of an overlap between the sealing ring 50 and the lower plastic member 30 may be greater than or equal to 0.2 mm. As such, a sufficient contact area can exist between the sealing ring 50 and the lower plastic member 30, thereby effectively extending the sealing surface between the sealing ring 50 and the lower plastic member 30.

Referring further to FIG. 10, the sealing ring 50 may be in contact with the inner wall of the first hole 11 of the top cover 10, the inner wall of the second hole 31 of the lower plastic member 30, the bottom wall of the thinning recess 33, and part of the second surface 102 of the top cover 10. The sealing ring 50 located in the first hole 11 of the top cover 10 is in interference fit with the top cover 10 in the length direction of the top cover assembly 100. The sealing ring 50 located in the second hole 31 of the lower plastic member 30 is in interference fit with the lower plastic member 30 in the thickness direction of the top cover assembly 100. It may be understood that, on the basis of forming the primary sealing between the bottom of the sealing ring 50 and the lower plastic member 30, forming the secondary sealing between the top of the sealing ring 50 and the top cover 10 can enhance the sealing performance of the sealing ring 50, thereby further preventing the electrolyte inside the electrode assembly 220 or the moisture outside the battery cell 200 from entering the gap between the top cover 10 and the terminal post 40, and thus avoiding the conduction between the top cover 10 and the terminal post 40.

In embodiments of the disclosure, the sealing ring 50 located in the first hole 11 of the top cover 10 may be in contact with the end of the protrusion 22 facing away from the upper-plastic-member body 21. The sealing ring 50 located in the first hole 11 of the top cover 10 may be in contact with one or more combinations of the bottom surface 224 of the protrusion 22, the first transitional curved surface 223 of the protrusion 22, the guide inclined surface 221 of the protrusion 22, or the second transitional curved surface 225 of the protrusion 22.

It may be understood that, by configuring the sealing ring 50 to be in contact with the upper plastic member 20, the sealing ring 50 can cooperate with the upper plastic member 20 to isolate the top cover 10 from the terminal post 40, thereby enabling good insulation performance between the top cover 10 and the terminal post 40, effectively avoiding the problem of short circuit caused by the electrical conduction between the top cover 10 and the terminal post 40, and improving reliability.

Further, the sealing ring 50 located in the first hole 11 of the top cover 10 may be in interference fit with the end of the protrusion 22 facing away from the upper-plastic-member body 21. An amount of interference (i.e., an interference distance) between the sealing ring 50 and the upper plastic member 20 in the thickness direction of the top cover assembly 100 may range from 0.1 mm to 0.3 mm (including endpoint values of 0.1 mm and 0.3 mm).

The sealing ring 50 located in the first hole 11 of the top cover 10 may also be located in the first gap *W1* between the guide inclined surface 221 of the upper plastic member 20 and the inner wall of the first hole 11 of the top cover 10, and may cover part of the guide inclined surface 221, or cover the guide inclined surface 221 and at least part of the second transitional curved surface 225. It may be understood that, by making part of the sealing ring 50 be located in the first gap *W1,* and cover the guide inclined surface 221 or cover the guide inclined surface 221 and at least part of the second transitional curved surface 225, the sealing ring 50 can surround the bottom of the lower plastic member 30 (i.e., the end of the protrusion 22 facing away from the upper-plastic-member body 21), thereby increasing the upward compression space of the sealing ring 50 and the sealing height of the sealing ring 50. Therefore, the sealing ring 50 can surround a larger area of the bottom of the upper plastic member 20, thereby preventing metal particles from intruding into a gap between the top cover 10 and the terminal post 40 in the length direction of the battery cell 200 (i.e., X direction), and thus improving the insulation performance between the top cover 10 and the terminal post 40.

Reference can be made to FIG. 10 and FIG. 16, where FIG. 16 is a schematic structural view of the sealing ring 50 of the top cover assembly 100 as illustrated in FIG. 3, viewed from a direction.

The sealing ring 50 may include a first sub-portion 51 and a second sub-portion 52. The first sub-portion 51 may be sleeved on the post body 41 of the terminal post 40. The second sub-portion 52 may surround and be connected to the periphery of the first sub-portion 51, and is coaxial with the first sub-portion 51. The thickness of the second sub-portion 52 (i.e., the dimension of the second sub-portion 52 in the Z direction) is less than the thickness of the first sub-portion 51 (i.e., the dimension of the first sub-portion 51 in the Z direction), so that a step surface may be formed at a joint between the second sub-portion 52 and the first sub-portion 51. When the sealing ring 50 is in the first state, the first sub-portion 51 may be separated from the terminal post 40, the lower plastic member 30, and the top cover 10, and the second sub-portion 52 may be separated from the terminal post 40, the lower plastic member 30, and the top cover 10. When the sealing ring 50 is in the second state, the first sub-portion 51 may be located in the first hole 11 of the top cover 10, the second hole 31 of the lower plastic member 30, and the first gap *W1,* and the second sub-portion 52 may be located in the second hole 31 of the lower plastic member 30 and the second gap *W2*. The second sub-portion 52 located in the second gap *W2* may be in interference fit with the top cover 10 in the thickness direction of the top cover assembly 100.

It may be understood that, by configuring the sealing ring 50 to include the first sub-portion 51 and the second sub-portion 52 with different thicknesses, a step can be formed in the sealing ring 50. During assembly of the top cover assembly 100, the step can allow the sealing ring 50 to deform quickly and sufficiently between the lower plastic member 30 and the terminal post 40 in the thickness direction of the battery cell 200 (i.e., *Z* direction), as well as between the top cover 10 and the terminal post 40 in the length direction of the battery cell 200 (i.e., *X direction).* Therefore, the different-sized spaces between the lower plastic member 30 and the terminal post 40, as well as between the top cover 10 and the terminal post 40, can be filled, thereby improving the assembly efficiency and sealing performance of the top cover assembly 100.

The embodiments of the disclosure are described in detail above. Specific examples are used herein to describe the principle and implementations of the disclosure. The illustration of the embodiments is only used to help understand the method and core ideas of the disclosure. In addition, those of ordinary skill in the art may make modifications to the specific implementations and application scopes according to the idea of the disclosure. In conclusion, the content of the specification shall not be construed as a limitation to the disclosure.

## Claims

1. A top cover assembly (100), comprising:
a top cover (10) having a first surface (101) and a second surface (102), wherein the first surface (101) and the second surface (102) are opposite to each other in a thickness direction of the top cover (10), a first hole (11) and a first mounting recess (12) are defined in the top cover (10), the first hole (11) extends through the first surface (101) and the second surface (102), an opening of the first mounting recess (12) is located on the first surface (101), and the first mounting recess (12) is coaxial with and in communication with the first hole (11);
a terminal post (40) passing through the first hole (11);
an upper plastic member (20) comprising an upper-plastic-member body (21) and a protrusion (22) connected to the upper-plastic-member body (21), wherein both the upper-plastic-member body (21) and the protrusion (22) are sleeved on the terminal post (40), the upper-plastic-member body (21) is mounted in the first mounting recess (12), and the protrusion (22) is mounted in the first hole (11); an outer surface of the protrusion (22) comprises a guide inclined surface (221), a first transitional curved surface (223), and a bottom surface (224), wherein the bottom surface (224) is an end surface of an end of the protrusion (22) facing away from the upper-plastic-member body (21), a distance between the guide inclined surface (221) and a hole wall of the first hole (11) gradually increases in a direction in which the upper-plastic-member body (21) faces towards the protrusion (22), and the first transitional curved surface (223) is connected between the guide inclined surface (221) and the bottom surface (224) in a bent manner; and
a sealing ring (50) sleeved on the terminal post (40), wherein the sealing ring (50) is partially located in the first hole (11) and is in interference fit with the end of the protrusion (22) facing away from the upper-plastic-member body (21), and the sealing ring (50) located in the first hole (11) is further in contact with the bottom surface (224) and the first transitional curved surface (223).

2. The top cover assembly (100) of claim 1, wherein a first gap (*W1*) is defined between the guide inclined surface (221) and an inner wall of the first hole (11), and the sealing ring (50) is partially located in the first gap (*W1*) and covers at least part of the guide inclined surface (221).

3. The top cover assembly (100) of claim 1 or claim 2, wherein the outer surface of the protrusion (22) further comprises an outer side surface (222) and a second transitional curved surface (225), wherein the outer side surface (222) is arranged facing towards an inner wall of the first hole (11), and the second transitional curved surface (225) is connected between the outer side surface (222) and the guide inclined surface (221) in a bent manner.

4. The top cover assembly (100) of any one of claims 1 to 3, wherein a first through hole (23) is defined in the upper plastic member (20), wherein the first through hole (23) extends through both the upper-plastic-member body (21) and the protrusion (22) in a thickness direction of the upper plastic member (20), and the terminal post (40) passes through the first through hole (23); and
the outer surface of the protrusion (22) further comprises a third transitional curved surface, wherein the third transitional curved surface is connected between the bottom surface (224) and an inner wall of the first through hole (23) in a bent manner, and the third transitional curved surface is further in contact with the sealing ring (50) located in the first hole (11).

5. The top cover assembly (100) of any one of claims 1 to 4, wherein a fourth transitional curved surface (19) is connected between a bottom wall of the first mounting recess (12) and an inner wall of the first hole (11), and a joint between the upper-plastic-member body (21) and the protrusion (22) is arranged facing towards the fourth transitional curved surface (19).

6. The top cover assembly (100) of any one of claims 1 to 5, wherein an amount of interference between the sealing ring (50) and the upper plastic member (20) in a thickness direction of the top cover assembly (100) ranges from 0.1 mm to 0.3 mm.

7. The top cover assembly (100) of any one of claims 1 to 6, wherein the top cover assembly (100) further comprises a lower plastic member (30) stacked with the top cover (10), wherein a second hole (31) is defined in the lower plastic member (30), and the second hole (31) extends through the lower plastic member (30) in a thickness direction of the lower plastic member (30) and is in communication with the first hole (11);
the terminal post (40) comprises a post body (41) and a base (42), wherein the post body (41) passes through the first hole (11), the second hole (31), and the upper plastic member (20), the base (42) is coaxial with and connected to the post body (41), the base (42) is located on a side of the lower plastic member (30) facing away from the top cover (10), and a second gap *(W2)* is defined between the base (42) and the lower plastic member (30); and
the sealing ring (50) sleeved on the post body (41) is located in the second hole (31) and the second gap (W2), and the sealing ring (50) located in the second gap *(W2)* is in interference fit with the lower plastic member (30) in a thickness direction of the top cover assembly (100).

8. The top cover assembly (100) of claim 7, wherein a thinning recess (33) is defined in the lower plastic member (30), wherein an opening of the thinning recess (33) is located on a surface of the lower plastic member (30) facing away from the top cover (10), the thinning recess (33) is coaxial with and in communication with the second hole (31), and the second gap *(W2)* is formed at a position where the thinning recess (33) is located.

9. The top cover assembly (100) of claim 8, wherein a distance between a bottom wall of the thinning recess (33) and a surface of the lower plastic member (30) facing towards the top cover (10) ranges from 0.1 mm to 0.7 mm.

10. The top cover assembly (100) of claim 8 or claim 9, wherein the sealing ring (50) is in contact with an inner wall of the first hole (11), an inner wall of the second hole (31), a bottom wall of the thinning recess (33), and part of a surface of the top cover (10) facing towards the lower plastic member (30), the sealing ring (50) located in the first hole (11) is in interference fit with the top cover (10) in a length direction of the top cover assembly (100), and the sealing ring (50) located in the second hole (31) is in interference fit with the lower plastic member (30) in the thickness direction of the top cover assembly (100).

11. The top cover assembly (100) of any one of claims 8 to 10, wherein in the length direction of the top cover assembly (100), a length of an overlap between the sealing ring (50) and the lower plastic member (30) is greater than or equal to 0.2 mm.

12. The top cover assembly (100) of any one of claims 7 to 11, wherein the post body (41) comprises a first sub-post (411) and a second sub-post (412), wherein the first sub-post (411) is coaxial with and connected to the second sub-post (412), the first sub-post (411) is connected between the second sub-post (412) and the base (42), and a cross-sectional width (*D2)* of the first sub-post (411) in a height direction of the terminal post (40) is greater than a cross-sectional width (*D3)* of the second sub-post (412) in the height direction of the terminal post (40) and less than a cross-sectional width (*D1)* of the base (42) in the height direction of the terminal post (40).

13. The top cover assembly (100) of any one of claims 1 to 12, wherein a cross-sectional width of the upper-plastic-member body (21) in a thickness direction of the upper plastic member (20) is greater than a cross-sectional width of the protrusion (22) in a thickness direction of the top cover (10).

14. A battery cell, comprising an electrode assembly (220), a housing (210), and the top cover assembly (100) of any one of claims 1 to 13, wherein the top cover assembly (100) is connected to the housing (210), the top cover assembly (100) and the housing (210) cooperatively define an accommodating space, and the electrode assembly (220) is located in the accommodating space.

15. An electricity-consumption device, comprising the battery cell of claim 14.
